# EUROPÄISCHE PATENTSCHRIFT

(11) **EP 3 217 042 B1**
(45) Veröffentlichungstag und Bekanntmachung des Hinweises auf die Patenterteilung: **06.05.2020**
(21) Anmeldenummer: 17158436.0
(22) Anmeldetag: 28.02.2017
(51) Int. Cl.: F16H 59/08

(54) **VERFAHREN UND ANORDNUNG ZUR STEUERUNG VON FAHRZUSTÄNDEN EINES NUTZFAHRZEUGS**
METHOD AND ASSEMBLY FOR CONTROLLING DRIVING STATES OF A COMMERCIAL VEHICLE
PROCÉDÉ ET SYSTÈME DE COMMANDE D'ÉTATS DE CONDUITE D'UN VÉHICULE UTILITAIRE

(30) Priorität: 08.03.2016 DE 102016203763
(43) Veröffentlichungstag der Anmeldung: 13.09.2017
(73) Patentinhaber: Deere & Company, Moline, IL 61265 (US)
(72) Erfinder: Wagner, Christoph, 68163 Mannheim (DE)
(74) Vertreter: Dehnhardt, Florian Christopher

(56) Entgegenhaltungen:
- WO-A1-2013/106504
- DE-A1- 10 217 614
- DE-A1-102011 087 330
- US-A1- 2009 288 903

## Beschreibung

Die Erfindung betrifft ein Verfahren und eine Anordnung zur Steuerung von Fahrzuständen eines Nutzfahrzeugs.

Nutzfahrzeuge werden u.a. dazu verwendet, bestimmte Arbeitsfunktionen auszuführen. Dies können z.B. Lade- oder Transportarbeiten sein, zu deren Durchführung das Nutzfahrzeug über geeignete Werkzeuge verfügt. Bei einem landwirtschaftlichen Nutzfahrzeug sind diese Werkzeuge beispielsweise als eine bewegliche Ladeschaufel, Mistgabel oder ein anderes Arbeitsgerät ausgebildet. Für eine Betätigung dieser Werkzeuge sind in der Fahrerkabine des Nutzfahrzeugs üblicherweise entsprechende Betätigungselemente und -instrumente vorgesehen. Außerdem muss der Fahrer während der Ausführung solcher Arbeitsfunktionen oftmals die Fahrtrichtung zwischen "Vorwärts" und "Rückwärts" wechseln. Hierzu ist ebenfalls mindestens ein entsprechendes Betätigungselement für den Fahrer vorgesehen.

WO 2013/106504 A offenbart ein Steuerorgan für eine Arbeitsmaschine, mit dem zwischen Vorwärtsposition, Stillstandsposition und Rückwärtsposition umgeschaltet werden kann.

Der vorliegenden Erfindung liegt die Aufgabe zugrunde, die Steuerung des Nutzfahrzeugs während seines Betriebs zu vereinfachen. Diese Aufgabe wird gemäß den Merkmalen der unabhängigen Patentansprüche 1 und 10 gelöst.

Das Verfahren gemäß Patentanspruch 1 ermöglicht mittels eines Steuerorgans eine wechselseitige Ansteuerung der Fahrzustände "Vorwärts" und "Rückwärts" eines Nutzfahrzeugs. Dabei bedeutet "Vorwärts" eine von einem Getriebe des Nutzfahrzeugs angetriebene Vorwärtsfahrt und "Rückwärts" eine von dem Getriebe des Nutzfahrzeugs angetriebene Rückwärtsfahrt. Aus einem aktuellen Fahrzustand ("Vorwärts" bzw. "Rückwärts") heraus ist mittels des Steuerorgans ein neuer Soll-Fahrzustand ("Rückwärts" bzw. "Vorwärts") ansteuerbar.

Weiterhin ist ein Fahrzustand "Stillstand" vorgesehen, der einem stillstehenden Abtrieb des Fahrzeug-Getriebes ohne Trennung des Antriebsstranges durch eine Kupplung entspricht. Dieser Fahrzustand wird auch als aktiver Stillstand bezeichnet und ist insbesondere bei Traktoren mit stufenlosem Getriebe möglich. Derartige Stufenlosgetriebe ermöglichen auch ein Anfahren aus dem Stillstand ohne Anfahrkupplung. Bei Getrieben, die keinen aktiven Stillstand ermöglichen, kann die Neutralstellung des Getriebes oder das Öffnen der Fahrkupplung den Fahrzustand "Stillstand" bilden.

Ungeachtet dessen ist der Fahrzustand "Stillstand" bei einem beabsichtigten Fahrtrichtungswechsel ("Vorwärts" nach "Rückwärts" oder "Rückwärts" nach "Vorwärts") als temporärer Betriebszustand bzw. Zwischenzustand oftmals erwünscht oder erforderlich, um das Nutzfahrzeug während seines Betriebes fahrtechnisch und sicherheitstechnisch zu unterstützen. Dabei beendet der Fahrzustand "Stillstand" die Antriebsbewegung der Antriebsachse(n) des Nutzfahrzeugs während eines aktuellen Fahrzustandes "Vorwärts" oder "Rückwärts".

Vorzugsweise kann auch mindestens ein weiterer Fahrzustand vorgesehen sein.

Die Steuerung des Nutzfahrzeugs, insbesondere eines Traktors oder eines anderen landwirtschaftlichen Fahrzeugs, während seines Betriebs (z.B. eine Ladetätigkeit) wird nun benutzerfreundlich vereinfacht, indem bei einem beabsichtigten Wechsel des aktuellen Fahrzustandes zu einem Soll-Fahrzustand das Steuerorgan derart betätigt wird, dass vor der Ansteuerung des Soll-Fahrzustandes automatisch zunächst der Fahrzustand "Stillstand" angesteuert wird.

Der Begriff "Ansteuerung" eines Fahrzustandes (z.B. Soll-Fahrzustand oder "Stillstand") ist in dem Sinne zu verstehen, dass dieser Fahrzustand mittels einer Betätigung des Steuerorgans erreicht bzw. aktiviert wird.

Dies bedeutet, dass bei einem beabsichtigten Wechsel von einem aktuellen Fahrzustand "Vorwärts" zu einem Soll-Fahrzustand "Rückwärts" oder von einem aktuellen Fahrzustand "Rückwärts" zu einem Soll-Fahrzustand "Vorwärts" zwangsläufig oder automatisch zuerst der Fahrzustand "Stillstand" angesteuert wird. Erst danach kann der eigentlich beabsichtigte Soll-Fahrzustand erreicht bzw. aktiviert werden. Hierdurch wird eine intuitive und sehr einfache Steuerung des Nutzfahrzeugs durch den Fahrzeugführer bzw. Benutzer ermöglicht, indem bei dem Richtungswechsel von "Vorwärts" nach "Rückwärts" und umgekehrt für den temporären Fahrzustand "Stillstand" herkömmlich erforderliche zusätzliche und umständliche Steuervorgänge mit anderen Steuerwegen und/oder zusätzlichen Bedienelementen vermieden werden. Vorteilhaft kann deshalb die Steuerfunktion für den Fahrzustand "Stillstand" und auch die hierfür erforderliche Steuerbewegung in ein Steuerorgan und dessen Steuerbewegungen integriert werden, welches auch zur Steuerung des eigentlichen Fahrtrichtungswechsels vorgesehen ist. Folglich kann der Benutzer auf einfache Weise einen beabsichtigten Fahrtrichtungswechsel steuern und den Fahrzustand "Stillstand" ansteuern, da das Ansteuern des Fahrzustandes "Stillstand" in den Steuervorgang des Fahrtrichtungswechsels integriert ist.

Da der Fahrzustand "Stillstand" während einer beabsichtigten Ansteuerung eines Soll-Fahrzustandes automatisch angesteuert wird, ist ohne zusätzlichen Steuerungsaufwand seitens des Benutzers bzw. Fahrzeugführers gewährleistet, dass vor einem Fahrtrichtungswechsel erst der Fahrzustand "Stillstand" aktiviert wird.

Dieses Ansteuerungs-Prinzip trägt dazu bei, dass die Anzahl unterschiedlicher Bedienungsfunktionen und/oder Bedienelemente zur Steuerung des Nutzfahrzeugs reduziert werden kann. Somit kann auch eine entsprechende Anordnung mit dem Steuerorgan und ggf. weiteren Bedienelementen entsprechend raumsparender und weniger komplex bereitgestellt werden.

Vorzugsweise wird das Ansteuern des Soll-Fahrzustandes von dem Steuerorgan mittels einer Wechsel-Steuerbewegung durchgeführt, wobei der Fahrzustand "Stillstand" vor oder während einer derartigen Wechsel-Steuerbewegung automatisch erreicht wird. Hierdurch ist die Ansteuerung des temporären Fahrzustandes "Stillstand" bedienerfreundlich und intuitiv in den Ablauf der Wechsel-Steuerbewegung integriert.

In einer vorteilhaften Ausführungsform ist das Steuerorgan während eines aktuellen Fahrzustandes lösbar arretiert, wobei diese Arretierung vor der Durchführung der Wechsel-Steuerbewegung gelöst werden muss. Hierdurch sind versehentliche Fehlbedienungen des Steuerorgans zuverlässig vermieden. Das Lösen dieser Arretierung kann vorzugsweise in einer zusätzlichen Funktion den temporären Fahrzustand "Stillstand" aktivieren. Der Fahrzustand "Stillstand" wird folglich ohne zusätzlichen Bedienungsaufwand automatisch vor einer beabsichtigten Wechsel-Steuerbewegung angesteuert.

Zum Lösen der Arretierung kann beispielsweise ein Druckknopf an dem Steuerorgan betätigt werden. Eine Betätigung dieses Druccknopfes kann dann gleichzeitig eine Aktivierung des Fahrzustandes "Stillstand" bewirken. Diese Mehrfachfunktion des Druckknopfes unterstützt einen konstruktiv einfachen Aufbau des Steuerorgans.

Alternativ kann ein definierter Abschnitt oder Bestandteil der Wechsel-Steuerbewegung des Steuerorgans als eine Grund-Steuerbewegung betrachtet werden, derart, dass der Fahrzustand "Stillstand" mittels einer Durchführung der Grund-Steuerbewegung angesteuert bzw. aktiviert wird. Hierdurch können unterschiedliche Bewegungsabläufe des Steuerorgans zum Ansteuern des Soll-Fahrzustands einerseits und des Fahrzustands "Stillstand" andererseits auf einfache Weise vermieden werden.

Eine bedienungsfreundliche Ansteuerung mittels des Steuerorgans wird weiter unterstützt, indem die Wechsel-Steuerbewegung des Steuerorgans zur Aktivierung eines Soll-Fahrzustandes vorzugsweise eine wiederholte Durchführung der Grund-Steuerbewegung umfasst, insbesondere aus einer wiederholten Durchführung der Grund-Steuerbewegung besteht. Beispielsweise wird der Fahrzustand "Stillstand" durch eine erstmalige Durchführung der Grund-Steuerbewegung angesteuert, während eine sich daran anschließende nochmalige Durchführung derselben Grund-Steuerbewegung den Soll-Fahrzustand ansteuert. Hierdurch bleiben die Steuerbewegungen zur Ansteuerung der verschiedenen Fahrzustände besonders einfach und benutzerfreundlich.

In einer weiteren bevorzugten Ausführungsform wird eine zuverlässige Betätigung des Steuerorgans unterstützt, indem während der Durchführung der Wechsel-Steuerbewegung oder Grund-Steuerbewegung mindestens eine Rastposition zum lösbaren Einrasten des Steuerorgans vorgesehen ist. Mittels der Rastposition(en) wird technisch einfach immer eine eindeutige Position des Steuerorgans während der verschiedenen Ansteuerungs-Vorgänge erzielt.

Insbesondere entspricht das Überführen des Steuerorgans in eine Rastposition dem Ansteuern eines Fahrzustandes (insbesondere "Vorwärts", "Rückwärts" oder "Stillstand"), wodurch die Ansteuerung der verschiedenen Fahrzustände für den Benutzer noch intuitiver erfolgen kann.

Erfindungsgemäß ist vorgesehen, dass sich das Steuerorgan während eines aktuellen Fahrzustandes in einer mittleren Ruheposition befindet. Hierdurch ist der aktuelle Status des Steuerorgans für einen Benutzer auf einfache Weise eindeutig erkennbar.

Das Steuerorgan wird nach Ansteuerung des Fahrzustandes "Stillstand" oder eines Soll-Fahrzustandes selbsttätig (mittels eines geeigneten Mechanismus) wieder in seine Ruheposition zurückgeführt, wodurch die Handhabung des Steuerorgans für den Benutzer bzw. Fahrzeugführer weiter vereinfacht ist.

Die einzelnen Steuerbewegungen des Steuerorgans können besonders einfach und intuitiv ausgeführt werden, indem das Steuerorgan vorzugsweise als schwenkbarer Steuerhebel ausgebildet ist.

Alternativ kann das Steuerorgan als eine rotierbare bzw. drehbare Walze ausgebildet sein, wodurch das Steuerorgan besonders raumsparend angeordnet und komfortabel mit einem Finger seitens des Benutzers bedient werden kann.

In der Fahrerkabine kann eine Anordnung das Steuerorgan für den Fahrtrichtungswechsel aufweisen. Diese Anordnung kann noch weitere Bedienelemente zur Steuerung oder Durchführung unterschiedlicher Funktionen des Nutzfahrzeugs (z.B. ein Traktor oder ein anderes landwirtschaftliches Fahrzeug) enthalten. Dabei kann auch ein Betätigungsinstrument zur Steuerung einer Arbeitsfunktion (z.B. Transport von Material mittels einer Ladeschaufel) des Nutzfahrzeugs als Bestandteil der Anordnung vorgesehen sein. Um die verschiedenen notwendigen Fahrtrichtungswechsel während solcher Arbeitsfunktionen für den Benutzer bzw. Fahrzeugführer komfortabler zu gestalten, ist das Steuerorgan vorzugsweise an dem vorgenannten Betätigungsinstrument angeordnet. Hierdurch kann der Benutzer mit derselben Hand an einem einzigen Betätigungsinstrument sowohl Arbeitsfunktionen als auch gewünschte Fahrtrichtungswechsel steuern.

Das erfindungsgemäße Verfahren und eine entsprechende Anordnung werden im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
Fig. 1 eine schematische Seitenansicht der Handhabung eines Steuerorgans in einer ersten Ausführungsform,
Fig. 2 eine schematische Seitenansicht der Handhabung eines Steuerorgans in einer zweiten Ausführungsform,
Fig. 3 eine schematische Seitenansicht der Handhabung eines Steuerorgans in einer dritten Ausführungsform,
Fig. 4 eine perspektivische Darstellung einer weiteren Ausführungsform des Steuerorgans, und
Fig. 5 eine perspektivische Darstellung eines Betätigungsinstrumentes mit einem integrierten Steuerorgan.

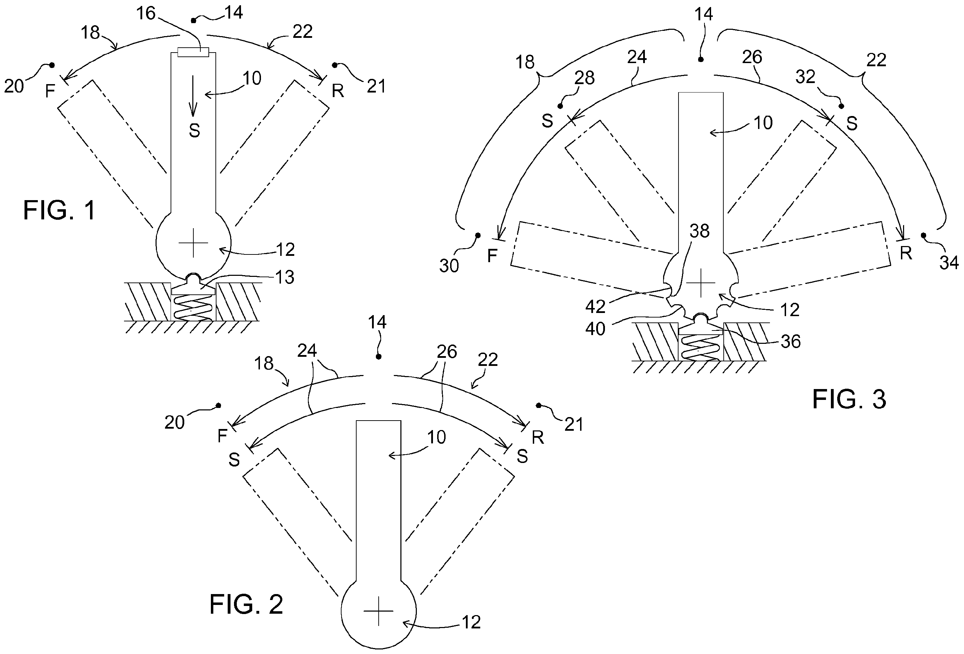

Anhand von Fig. 1 bis Fig. 5 wird das Verfahren und die Anordnung mit einem Steuerorgan 10 zur Steuerung eines Fahrtrichtungswechsels eines Nutzfahrzeugs näher erläutert. Dabei sind mindestens folgende Fahrzustände für das Nutzfahrzeug möglich:
- "Vorwärts" (mit dem Bezugszeichen "F") für eine von dem Getriebe des Nutzfahrzeugs angetriebene Vorwärtsfahrt,
- "Rückwärts" (mit dem Bezugszeichen "R") für eine von dem Getriebe des Nutzfahrzeugs angetriebene Rückwärtsfahrt, und
- "Stillstand" (mit dem Bezugszeichen "S") für einen stehenden Abtrieb des Getriebes ohne Trennung des Antriebsstranges des Nutzfahrzeugs. Bei Getrieben, die keinen aktiven Stillstand ermöglichen, kann die Neutralstellung des Getriebes oder das Öffnen der Fahrkupplung an die Stelle eines derartigen aktiven Stillstands treten.

Fig. 1 zeigt eine erste Ausführungsform für die Handhabung und Funktionsweise eines hebelartigen Steuerorgans 10, welches um ein schematisch dargestelltes Schwenklager 12 schwenkbar gelagert ist. Das Schwenklager 12 ist in hier nicht dargestellter Weise mit einem Steuermechanismus gekoppelt, der je nach Schwenkposition des Steuerorgans 10 einen gewünschten neuen Fahrzustand (Soll-Fahrzustand) aktiviert. Während eines aktuellen Fahrzustandes F, R oder S befindet sich das Steuerorgan 10 in einer mittleren Ruheposition 14. In dieser Ruheposition 14 ist das Steuerorgan 10 lösbar arretiert - beispielsweise mittels eines Arretierzapfens 13, der durch eine Federkraft vorgespannt in das Schwenklager 12 eingreift und bei Betätigung des Druccknopfes 16 aus dem Schwenklager 12 gedrückt werden kann. Fährt das Nutzfahrzeug beispielsweise aktuell rückwärts (R) und soll ein Fahrtrichtungswechsel nach F durchgeführt werden, muss der Benutzer zunächst die Arretierung des Steuerorgans 10 lösen. Hierzu wird ein Druckknopf 16 in Richtung des Schwenklagers 12 gedrückt. Diese Betätigung des Druckknopfes 16 aktiviert automatisch den Fahrzustand S. Auf diese Weise wird vor dem eigentlichen Fahrtrichtungswechsel erst der Rückwärts-Antrieb des Nutzfahrzeugs definiert und automatisch beendet. Erst nach Lösen der Arretierung, d.h. erst nach Aktivierung des Fahrzustandes S kann das Steuerorgan 10 eine Wechsel-Steuerbewegung 18 durchführen, indem es in Richtung einer Soll-Position 20 geschwenkt wird. Diese Soll-Position 20 entspricht bei aktuellem Fahrzustand R dem Soll-Fahrzustand F. Eine prinzipiell gleiche Betätigung des Steuerorgans 10 ist vorgesehen, wenn das Fahrzeug bei einem aktuellen Fahrzustand F in den Soll-Fahrzustand R wechseln soll. Das Steuerorgan 10 führt dabei eine zur Wechsel-Steuerbewegung 18 gegenläufige Wechsel-Steuerbewegung 22 in Richtung einer Soll-Position 21 durch, welche dem Soll-Fahrzustand R entspricht. Nach Ansteuerung des Soll-Fahrzustandes F oder R wird das Steuerorgan 10 mittels eines geeigneten Mechanismus selbsttätig wieder in seine Ruheposition 14 zurückgeführt.

Das Steuerorgan 10 gemäß Fig. 2 liegt bei einem aktuellen Fahrzustand F, R oder S wiederum in der Ruheposition ein. Durch eine Federkraft und/oder lösbare Arretierung oder dergleichen kann das Steuerorgan 10 gegen unbeabsichtigte Bewegungen aus der Ruheposition heraus gesichert sein. Das Steuerorgan 10 wird wiederum geschwenkt, um eine Wechsel-Steuerbewegung 18 bzw. 22 für einen Fahrtrichtungswechsel durchzuführen. Allerdings setzt sich hier die Wechsel-Steuerbewegung 18 bzw. 22 aus zwei nacheinander durchgeführten Grund-Steuerbewegungen 24 bzw. 26 zusammen. Die Grund-Steuerbewegung 24 bzw. 26 wird also einmal wiederholt durchgeführt, um den Soll-Fahrzustand anzusteuern. Nach Durchführung der Grund-Steuerbewegung 24 bzw. 26 oder der Wechsel-Steuerbewegung 18 bzw. 22 - d.h. nach Aktivierung des Fahrzustandes S oder des Soll-Fahrzustandes F bzw. R - wird das Steuerorgan 10 mittels eines geeigneten Mechanismus selbsttätig wieder in seine Ruheposition 14 zurückgeführt. Auch bei diesem Steuerungsschema muss der Benutzer zwangsläufig bzw. automatisch erst den Fahrzustand S aktivieren, bevor der gewünschte Soll-Fahrzustand F oder R angesteuert wird.

Das Steuerorgan 10 gemäß Fig. 3 unterscheidet sich von der Variante gemäß Fig. 2 insbesondere durch eine andere Ausgestaltung der Wechsel-Steuerbewegung 18 bzw. 22. Die Grund-Steuerbewegung 24 bzw. 26 zur Ansteuerung des temporären Fahrzustandes S bildet hier einen ersten Abschnitt der gesamten Wechsel-Steuerbewegung 18 bzw. 22. Nachdem die gesamte Wechsel-Steuerbewegung 18 bzw. 22 durchgeführt wird, ist der gewünschte Soll-Fahrzustand F oder R aktiviert. Eine bedienungsfreundliche Handhabung des Steuerorgans 10 wird unterstützt, indem ausgehend von der Ruheposition 14 die anzusteuernden Zustände S, F und R jeweils einer spezifischen Rastposition 28, 30, 32 oder 34 entsprechen. In diesen Rastpositionen 28, 30, 32, 34 ist das Steuerorgan 10 lösbar eingerastet, so dass dem Benutzer der angesteuerte Fahrzustand eindeutig signalisiert wird. Dieses lösbare Einrasten wird beispielsweise mittels eines Rastelementes 36 erzielt, welches durch eine Federkraft vorgespannt gegen eine Steuerbahn 38 des Schwenklagers 12 drückt bzw. in einzelne Ausnehmungen 40, 42 dieser Steuerbahn 38 einrastet.

Bei der Variante gemäß Fig. 3 wird das Steuerorgan 10 zumindest nach Durchführung der Wechsel-Steuerbewegung 18 bzw. 22 - d.h. nach Aktivierung des Soll-Fahrzustandes F bzw. R - mittels eines geeigneten Mechanismus selbsttätig wieder in seine Ruheposition 14 zurückgeführt.

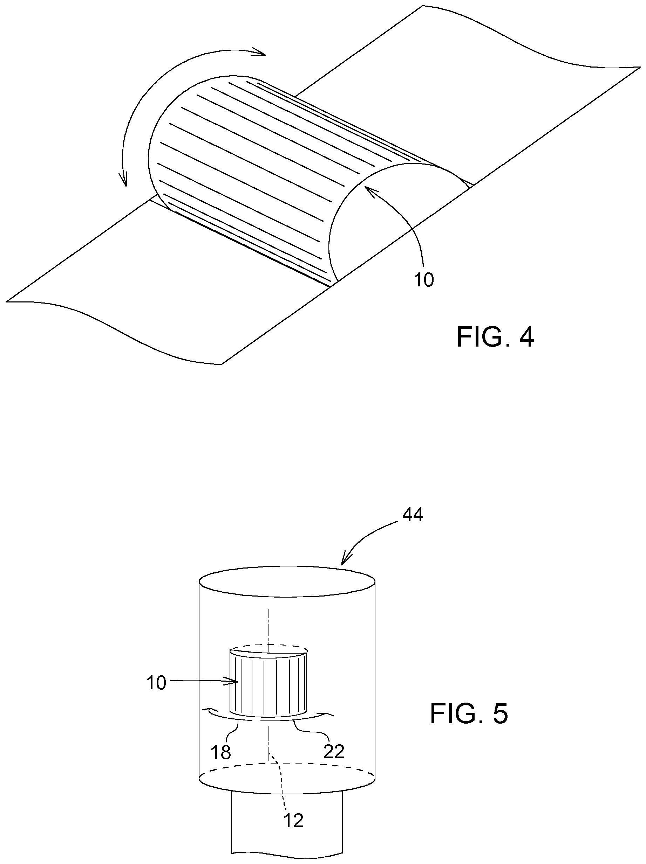

Wie anhand von Fig. 1 bis Fig. 3 dargestellt, kann das Steuerorgan 10 als schwenkbarer Steuerhebel ausgebildet sein. Alternativ kann das Steuerorgan 10 gemäß Fig. 4 als drehbare bzw. rotationsfähige Steuerwalze ausgebildet sein, welche zur Bedienung mittels eines Fingers bzw. Daumens des Benutzers geeignet ist. Prinzipiell können bei dieser Steuerwalze dieselben Ansteuer-Schemata bzw. Steuerbewegungen realisiert werden, wie anhand von Fig. 1 bis Fig. 3 geschildert.

In Fig. 5 ist ein Betätigungsinstrument 44 (z.B. ein sogenannter Joystick) dargestellt, welches mit entsprechenden Steuerfunktionen ausgestattet zur Steuerung verschiedener Arbeitsfunktionen eines Nutzfahrzeugs, z.B. eines Traktors oder eines anderen landwirtschaftlichen Fahrzeugs, verwendet wird. In dieses Betätigungsinstrument ist das Steuerorgan 10 integriert, indem es an einer seitlichen Oberfläche des Betätigungsinstrumentes 44 angeordnet ist. Abweichend davon kann auch eine Anordnung an einer oberen, vorderen, hinteren oder unteren Oberfläche des Betätigungsinstrumentes 44 vorgesehen sein. Der Benutzer bzw. Fahrer des Nutzfahrzeugs kann deshalb sehr bedienungsfreundlich mit einer Hand und einem einzigen Betätigungsinstrument sowohl Arbeitsfunktionen als auch erwünschte Fahrtrichtungswechsel steuern.

## Patentansprüche

1. Verfahren zur wechselweisen Ansteuerung folgender Fahrzustände eines Nutzfahrzeugs mittels eines Steuerorgans (10) :
- "Vorwärts" (F) für eine von einem Getriebe des Nutzfahrzeugs angetriebene Vorwärtsfahrt, und
- "Rückwärts" (R) für eine von dem Getriebe des Nutzfahrzeugs angetriebene Rückwärtsfahrt,
wobei aus einem aktuellen Fahrzustand "Vorwärts" oder "Rückwärts" heraus ein Soll-Fahrzustand "Rückwärts" (R) oder "Vorwärts" (F) ansteuerbar ist,
wobei ein weiterer Fahrzustand "Stillstand" (S) für einen stillstehenden Abtrieb des Getriebes ohne Trennung des Antriebsstranges des Nutzfahrzeugs vorgesehen ist, und wobei vor der Ansteuerung des Soll-Fahrzustandes "Rückwärts" (R) oder "Vorwärts" (F) der Fahrzustand "Stillstand" (S) angesteuert wird, **dadurch gekennzeichnet, dass** sich das Steuerorgan (10) während eines aktuellen Fahrzustandes (F, R, S) in einer mittleren Ruheposition (14) befindet, in die das Steuerorgan (10) nach Ansteuerung des Fahrzustandes "Stillstand" (S) und/oder des Soll-Fahrzustandes "Vorwärts" (F) oder "Rückwärts" selbsttätig wieder zurückgeführt wird.

2. Verfahren nach Anspruch 1, **dadurch gekennzeichnet, dass** zum Ansteuern des Soll-Fahrzustandes (F, R) von dem Steuerorgan (10) eine Wechsel-Steuerbewegung (18, 22) durchgeführt wird, wobei der Fahrzustand "Stillstand" (S) vor oder während der Wechsel-Steuerbewegung (18, 22) angesteuert wird.

3. Verfahren nach Anspruch 2, **dadurch gekennzeichnet, dass** das Steuerorgan (10) während des aktuellen Fahrzustandes lösbar arretiert ist, wobei diese Arretierung (13) vor Durchführung der Wechsel-Steuerbewegung (18, 22) gelöst wird.

4. Verfahren nach Anspruch 3, **dadurch gekennzeichnet, dass** der Fahrzustand "Stillstand" (S) durch Lösen der Arretierung (13) angesteuert wird.

5. Verfahren nach Anspruch 2 oder 3, **dadurch gekennzeichnet, dass** der Fahrzustand "Stillstand" (S) mittels einer Grund-Steuerbewegung (24, 26) als Bestandteil der Wechsel-Steuerbewegung (18, 22) des Steuerorgans (10) angesteuert wird.

6. Verfahren nach Anspruch 5, **dadurch gekennzeichnet, dass** die Wechsel-Steuerbewegung (18, 22) des Steuerorgans (10) zur Ansteuerung des Soll-Fahrzustandes (F, R) eine wiederholte Durchführung der Grund-Steuerbewegung (24, 26) des Steuerorgans (10) umfasst.

7. Verfahren nach einem der Ansprüche 2 bis 6, **dadurch gekennzeichnet, dass** während der Wechsel-Steuerbewegung (18, 22) oder Grund-Steuerbewegung (24, 26) mindestens eine Rastposition (28, 30, 32, 34) zum lösbaren Einrasten des Steuerorgans (10) vorgesehen ist.

8. Verfahren nach Anspruch 7, **dadurch gekennzeichnet, dass** der Fahrzustand "Stillstand" (S) mittels Überführen des Steuerorgans (10) in eine Rastposition (28, 32) angesteuert wird.

9. Verfahren nach Anspruch 7 oder 8, **dadurch gekennzeichnet, dass** der Soll-Fahrzustand (F, R) mittels Überführen des Steuerorgans (10) in eine Rastposition (30, 34) angesteuert wird.

10. Anordnung mit einem Steuerorgan (10) zur wechselweisen Ansteuerung folgender Fahrzustände eines Nutzfahrzeugs:
- "Vorwärts" (F) für eine von einem Getriebe des Nutzfahrzeugs angetriebene Vorwärtsfahrt, und
- "Rückwärts" (R) für eine von dem Getriebe des Nutzfahrzeugs angetriebene Rückwärtsfahrt,
wobei aus einem aktuellen Fahrzustand "Vorwärts" oder "Rückwärts" heraus ein Soll-Fahrzustand "Rückwärts" (R) oder "Vorwärts" (F) ansteuerbar ist,
wobei ein weiterer Fahrzustand "Stillstand" (S) für einen stillstehenden Abtrieb des Getriebes ohne Trennung des Antriebsstranges des Nutzfahrzeugs vorgesehen ist, wobei das Steuerorgan (10) derart ausgebildet ist, dass es vor der Ansteuerung des Soll-Fahrzustandes "Rückwärts" (R) oder "Vorwärts" (F) den Fahrzustand "Stillstand" (S) ansteuert, **dadurch gekennzeichnet, dass** sich das Steuerorgan (10) während eines aktuellen Fahrzustandes (F, R, S) in einer mittleren Ruheposition (14) befindet, in die das Steuerorgan (10) nach Ansteuerung des Fahrzustandes "Stillstand" (S) und des Soll-Fahrzustandes "Vorwärts" (F) oder "Rückwärts" wieder selbsttätig zurückgeführt wird.

11. Anordnung nach Anspruch 10, **dadurch gekennzeichnet, dass** das Steuerorgan (10) als schwenkbarer Steuerhebel ausgebildet ist.

12. Anordnung nach Anspruch 10, **dadurch gekennzeichnet, dass** das Steuerorgan (10) als drehbare Steuerwalze ausgebildet ist.

13. Anordnung nach einem der Ansprüche 10 bis 12, **dadurch gekennzeichnet, dass** das Steuerorgan (10) an einem Betätigungsinstrument (44) angeordnet ist, welches zur Steuerung mindestens einer Arbeitsfunktion mittels des Nutzfahrzeugs ausgebildet ist.

## Claims

1. Method for alternately actuating the following driving states of a utility vehicle by means of a control element (10):
- "Forward" (F) for forward travel which is driven by a transmission of the utility vehicle, and
- "Reverse" (R) for reverse travel which is driven by the transmission of the utility vehicle,
wherein a "Reverse" or "Forward" setpoint driving state can be actuated from a current "Forward" or "Reverse" driving state,
wherein a further "stationary state" (S) driving state is provided for stationary output of the transmission without disconnecting the drive train of the utility vehicle, and
wherein the "stationary state" (S) driving state is actuated by the actuation of the "Reverse" or "Forward" setpoint driving state, **characterized in that** during a current driving state (F, R, S) the control element (10) is in a central position of rest (14) into which the control element (10) is automatically returned after the actuation of the "stationary state" (S) driving state and/or of the "Forward" (F) or "Reverse" setpoint driving state.

2. Method according to Claim 1, **characterized in that** in order to actuate the setpoint driving state (F, R) the control element (10) carries out an alternating control movement (18, 22), wherein the "stationary state" (S) driving state is actuated before or during the alternating control movement (18, 22).

3. Method according to Claim 2, **characterized in that** during the current driving state the control element (10) is releaseably locked, wherein this lock (13) is released before the alternating control movement (18, 22) is carried out.

4. Method according to Claim 3, **characterized in that** the "stationary state" (S) driving state is actuated by releasing the lock (13).

5. Method according to Claim 2 or 3, **characterized in that** the "stationary state" (S) driving state is actuated by means of a basic control movement (24, 26) as a component of the alternating control movement (18, 22) of the control element (10).

6. Method according to Claim 5, **characterized in that** the alternating control movement (18, 22) of the control element (10) comprises, for actuating the set point driving state (F, R), repeated execution of the basic control movement (24, 26) of the control element (10).

7. Method according to one of Claims 2 to 6, **characterized in that** during the alternating control movement (18, 22) or basic control movement (24, 26) at least one latching position (28, 30, 32, 34) for releaseably latching in the control element (10) is provided.

8. Method according to Claim 7, **characterized in that** the "stationary state" (S) driving state is actuated by transferring the control element (10) into a latching position (28, 32).

9. Method according to Claim 7 or 8, **characterized in that** the set point driving state (F, R) is actuated by transferring the control element (10) into a latching position (30, 34).

10. Arrangement having a control element (10) for alternately actuating the following driving states of a utility vehicle:
- "Forward" (F) for forward travel which is driven by a transmission of the utility vehicle, and
- "Reverse" (R) for reverse travel which is driven by the transmission of the utility vehicle,
wherein a "Reverse" or "Forward" setpoint driving state can be actuated from a current "Forward" or "Reverse" driving state,
wherein a further "stationary state" (S) driving state is provided for stationary output of the transmission without disconnecting the drive train of the utility vehicle, and wherein the control element (10) is designed in such a way that it activates the "stationary state" (S) driving state before the actuation of the "Reverse" or "Forward" setpoint driving state, **characterized in that** during a current driving state (F, R, S) the control element (10) is in a central position of rest (14) into which the control element (10) is automatically returned after the actuation of the "stationary state" (S) driving state and of the "Forward" (F) or "Reverse" setpoint driving state.

11. Arrangement according to Claim 10, **characterized in that** the control element (10) is embodied as a pivotable control lever.

12. Arrangement according to Claim 10, **characterized in that** the control element (10) is embodied as a rotatable control roller.

13. Arrangement according to one of Claims 10 to 12, **characterized in that** the control element (10) is arranged on an activation instrument (44) which is designed to control at least one working function by means of the utility vehicle.

## Revendications

1. Procédé de commande alternée des états de déplacement suivants d'un véhicule utilitaire au moyen d'un organe de commande (10) :
- « en avant » (F) pour un déplacement en marche avant propulsé par une boîte de vitesses du véhicule utilitaire, et
- « en arrière » (R) pour un déplacement en marche arrière propulsé par la boîte de vitesses du véhicule utilitaire,
un état de déplacement de consigne « en arrière » (R) ou « en avant » (F) pouvant être commandé à partir d'un état de déplacement actuel « en avant » ou « en arrière »,
un état de déplacement « immobilisé » (S) supplémentaire étant prévu pour une prise de force à l'arrêt de la boîte de vitesses sans séparation du groupe motopropulseur du véhicule utilitaire, et l'état de déplacement « immobilisé » (S) étant commandé avant la commande de l'état de déplacement de consigne « en arrière » (R) ou « en avant » (F), **caractérisé en ce que** l'organe de commande (10), pendant un état de déplacement (F, R, S) actuel, se trouve dans une position de repos (14) centrale dans laquelle l'organe de commande (10) est de nouveau ramené automatiquement après la commande de l'état de déplacement « immobilisé » (S) et/ou de l'état de déplacement de consigne « en avant » (F) ou « en arrière ».

2. Procédé selon la revendication 1, **caractérisé en ce que** pour commander l'état de déplacement de consigne (F, R), un mouvement de commande de changement (18, 22) est effectué par l'organe de commande (10), l'état de déplacement « immobilisé » (S) étant commandé avant ou pendant le mouvement de commande de changement (18, 22).

3. Procédé selon la revendication 2, **caractérisé en ce que** l'organe de commande (10) est bloqué de manière libérable pendant l'état de déplacement actuel, ce blocage (13) étant libéré avant d'effectuer le mouvement de commande de changement (18, 22).

4. Procédé selon la revendication 3, **caractérisé en ce que** l'état de déplacement « immobilisé » (S) est commandé en libérant le blocage (13).

5. Procédé selon la revendication 2 ou 3, **caractérisé en ce que** l'état de déplacement « immobilisé » (S) est commandé au moyen d'un mouvement de commande de base (24, 26) qui fait partie intégrante du mouvement de commande de changement (18, 22) de l'organe de commande (10).

6. Procédé selon la revendication 5, **caractérisé en ce que** le mouvement de commande de changement (18, 22) de l'organe de commande (10) destiné à commander l'état de déplacement de consigne (F, R) comprend une réalisation répétitive du mouvement de commande de base (24, 26) de l'organe de commande (10).

7. Procédé selon l'une des revendications 2 à 6, **caractérisé en ce que** pendant le mouvement de commande de changement (18, 22) ou le mouvement de commande de base (24, 26), au moins une position d'encliquetage (28, 30, 32, 34) destinée à l'encliquetage libérable de l'organe de commande (10) est prévue.

8. Procédé selon la revendication 7, **caractérisé en ce que** l'état de déplacement « immobilisé » (S) est commandé en faisant passer l'organe de commande (10) dans une position d'encliquetage (28, 32).

9. Procédé selon la revendication 7 ou 8, **caractérisé en ce que** l'état de déplacement de consigne (F, R) est commandé en faisant passer l'organe de commande (10) dans une position d'encliquetage (30, 34).

10. Arrangement comprenant un organe de commande (10) servant à la commande alternée des états de déplacement suivants d'un véhicule utilitaire :
- « en avant » (F) pour un déplacement en marche avant propulsé par une boîte de vitesses du véhicule utilitaire, et
- « en arrière » (R) pour un déplacement en marche arrière propulsé par la boîte de vitesses du véhicule utilitaire,
un état de déplacement de consigne « en arrière » (R) ou « en avant » (F) pouvant être commandé à partir d'un état de déplacement actuel « en avant » ou « en arrière »,
un état de déplacement « immobilisé » (S) supplémentaire étant prévu pour une prise de force à l'arrêt de la boîte de vitesses sans séparation du groupe motopropulseur du véhicule utilitaire, l'organe de commande (10) étant configuré de telle sorte qu'il commande l'état de déplacement « immobilisé » (S) avant la commande de l'état de déplacement de consigne « en arrière » (R) ou « en avant » (F), **caractérisé en ce que** l'organe de commande (10), pendant un état de déplacement (F, R, S) actuel, se trouve dans une position de repos (14) centrale dans laquelle l'organe de commande (10) est de nouveau ramené automatiquement après la commande de l'état de déplacement « immobilisé » (S) et de l'état de déplacement de consigne « en avant » (F) ou « en arrière ».

11. Arrangement selon la revendication 10, **caractérisé en ce que** l'organe de commande (10) est réalisé sous la forme d'un levier de commande pivotant.

12. Arrangement selon la revendication 10, **caractérisé en ce que** l'organe de commande (10) est réalisé sous la forme d'un cylindre de commande rotatif.

13. Arrangement selon l'une des revendications 10 à 12, **caractérisé en ce que** l'organe de commande (10) est disposé au niveau d'un instrument d'actionnement (44) qui est configuré pour commander au moins une fonction de travail au moyen du véhicule utilitaire.
